# EUROPÄISCHE PATENTSCHRIFT

(11) **EP 1 105 798 B1**
(45) Veröffentlichungstag und Bekanntmachung des Hinweises auf die Patenterteilung: **07.01.2004**
(21) Anmeldenummer: 99945869.8
(22) Anmeldetag: 01.07.1999
(51) Int. Cl.: G06F 9/46, G06F 12/14, G06F 1/00

(54) **VERFAHREN, ANORDNUNG SOWIE EIN SATZ MEHRERER ANORDNUNGEN ZUM SCHUTZ MEHRERER PROGRAMME UND/ODER MEHRERER DATEIEN VOR EINEM UNBEFUGTEN ZUGRIFF DURCH EINEN PROZESS**
METHOD, ARRAY AND SET OF SEVERAL ARRAYS FOR PROTECTING SEVERAL PROGRAMS AND/OR FILES FROM UNAUTHORIZED ACCESS BY A PROCESS
PROCEDE, DISPOSITIF ET JEU DE DISPOSITIFS POUR LA PROTECTION DE PLUSIEURS PROGRAMMES ET/OU DE PLUSIEURS FICHIERS CONTRE UN ACCES NON AUTORISE TENTE PAR UN PROCESSUS

(30) Priorität: 19.08.1998 DE 19837666
(43) Veröffentlichungstag der Anmeldung: 13.06.2001
(73) Patentinhaber: SIEMENS AKTIENGESELLSCHAFT, 80333 München (DE)
(72) Erfinder: SCHÄFER, Manfred, D-85661 Forstinning (DE)
(86) Internationale Anmeldenummer: PCT/DE1999/002013
(87) Internationale Veröffentlichungsnummer: WO 2000/011551

(56) Entgegenhaltungen:
- WO-A-96/18951
- US-A- 3 609 697
- US-A- 5 745 570
- US-A- 5 765 153

## Beschreibung

Die Erfindung betrifft ein Verfahren, eine Anordnung sowie ein Satz mehrerer Anordnungen zum Schutz mehrerer Programme vor einem unbefugten Zugriff durch einen Prozeß.

Ein Verfahren und eine Anordnung zum Schutz mehrerer Programme vor einem unbefugten Zugriff durch einen Anwender ist aus [1] oder [6] bekannt. Der Zugriffsschutz für ein Programm ist bei dem Verfahren aus [1] dadurch realisiert, daß jedem Benutzer eines Systems eine Zugriffsberechtigungsdatei zugeordnet wird. Versucht ein Prozeß, auf ein Programm zuzugreifen, so wird überprüft, ob der Benutzer, der den Prozeß gestartet hat, das Recht hat, auf das entsprechende Programm zuzugreifen. Der Zugriff wird nur gestattet, wenn der Prozeß von einem befugten und somit mit den Zugriffsrechten ausgestatteten Benutzer gestartet wurde.

Aus [2] ist ein sogenannter Virenscanner bekannt. Ein Virenscanner überprüft die gespeicherte, bekannte Folge von Daten, durch die das Programm realisiert ist. Wird eine Abweichung gegenüber der bekannten Folge festgestellt, so wird ein Benutzer des Systems benachrichtigt, daß möglicherweise das System mit einem Virus behaftet ist.

Aus [1] ist ferner ein Betriebssystem für einen Rechner bekannt. Das aus [1] bekannte Betriebssystem weist verschiedene Sicherheitslücken auf, durch die es einem Angreifer möglich ist, die Integrität von Programmen, die unter Verwendung des Betriebssystems durchgeführt werden, zu gefährden.

Ein möglicher Mechanismus, um den Schutz der Programme bei Verwendung dieses Betriebssystems zu gefährden ist ebenfalls in [5] beschrieben.

Weitere Verfahren zum Schutz von Programmen vor.einem unbefugten Zugriff durch einen Anwender anhand eines Betriebssystems Windows NT 4.0 sind aus [8] oder [9] bekannt.

In [7] ist ein Computersystem zur Lizenzierung von Software beschrieben.

Somit liegt der Erfindung das Problem zugrunde, mehrere Programme und/oder mehrere Dateien vor einem unbefugten Zugriff durch einen Prozeß zu schützen unter Verwendung eines Betriebssystems, welches grundsätzlich Sicherheitslücken aufweist.

Das Problem wird durch das Verfahren sowie durch die Anordnung gemäß den Merkmalen der unabhängigen Patentansprüche gelöst.

Unter Adreßraum ist in diesem Zusammenhang ein ProgrammBereich zu verstehen, der jeweils einem Programm zugeordnet ist.

Durch die Erfindung werden mehrere Sicherheitslücken des in [1] beschriebenen Betriebssystems geschlossen.

Weiterhin wird das jeweils zu schützende Programm gegen einen prozeduralen Angriff (Angriff auf einen Prozeß), z.B. gegen ein Trojanisches Pferd, geschützt.

Ferner ist ein erheblicher Vorteil der Erfindung darin zu sehen, daß bei skalierbarem Aufwand ein definiertes Maß an Sicherheit für das zu schützende Programm gewährleistet werden kann.

Durch den Satz mehrerer Anordnungen, die jeweils mit der Server-Anordnung verbunden sind, ist ein Schutz lokal bei den Anordnungen möglich derart, daß bei einem erkannten Angriff ein Alarmsignal generiert und an die Server-Anordnung gesendet wird, in der zentral eine vorgegebene Aktion ausgeführt wird. Auf diese Weise ist die Entdeckung lokaler Prozesse möglich, die der Server-Anordnung selbst nicht bekannt sind.

Es ist zur Erhöhung des erreichbaren Sicherheitsniveaus vorteilhaft, zumindest einem Teil der in einer Prozeß-Datei angegebenen Prozesse einen eindeutig kennzeichnenden kryptographischen Wert zu bilden, wobei der jeweilige Wert in der Prozeß-Datei enthalten ist. Für den zugreifenden Prozeß wird dessen kryptographischer Wert gebildet und bei der Überprüfung werden die kryptographischen Werte der Prozesse miteinander verglichen.

Bevorzugte Weiterbildungen der Erfindung ergeben sich aus den abhängigen Ansprüchen.

Der kryptographische Wert kann eine digitale Signatur sein. Er kann aber auch unter Verwendung einer Hash-Funktion, allgemein einer Einwegfunktion, gebildet werden.

In einer weiteren Ausgestaltung ist es vorteilhaft, in einem Aufrufmechanismus für eine Funktion eines Betriebssystemkerns, mit dem die Programme ausgeführt werden, einen Aufruf des zugreifenden Prozesses zu einer Überprüfungsfunktion weiterzuleiten, in der die Überprüfung erfolgt. Auf diese Weise ist eine effiziente und somit kostengünstige Realisierung der Erfindung möglich.

Die Überprüfungsfunktion kann als dynamisch bindbare Datei in den Überwachten Adreßraum eingebunden werden, wodurch eine weitere Verbesserung in der Schutzwirkung erreicht wird.

Ein Aufruf eines zugreifenden Prozesses kann auch zu einer Überprüfungsfunktion, die in dem Betriebssystemkern integriert ist, weitergeleitet werden, wobei die Überprüfung in der Überprüfungsfunktion erfolgt. Auf diese Weise kann die erreichbare Sicherheit des Schutzes für die Programme noch weiter erhöht werden.

Eine weitere Erhöhung des erreichbaren Sicherheitsniveaus kann gewährleistet werden, wenn ein Schutzprogramm, welches derart eingerichtet ist, daß die Erfindung ausführbar ist, verschlüsselt gespeichert ist und zu Beginn des Verfahrens entschlüsselt wird. Nach der Entschlüsselung des Schutzprogramms kann dessen Integrität überprüft werden und das Verfahren wird nur dann ausgeführt, wenn die Integrität des Schutzprogrammes gewährleistet ist. Nach der Integritätsprüfung des Schutzprogramms kann die Integrität aller in den Prozeß-Dateien enthaltenen Prozesse überprüft werden und das Verfahren wird nur ausgeführt, wenn die Integrität des Schutzprogramms gewährleistet ist. Nach der Integritätsprüfung der Prozesse, kann die Integrität des zu schützenden Programms überprüft werden und das Programm sollte nur ausgeführt werden, wenn die Integrität des Schutzprogramms gewährleistet ist.

Die Erfindung ist vorteilhaft einsetzbar in dem in [1] beschriebenen Betriebssystem.

Obwohl das im weiteren erläuterte Ausführungsbeispiel den Schutz von Programmen beschreibt, so ist ebenfalls ein Schutz mehrerer Dateien ohne weiteres gemäß der gleichen Vorgehensweise möglich.

Ein Ausführungsbeispiel der Erfindung ist in den Figuren dargesellt und wird im weiteren näher erläutert.

Es zeigen
- Figur 1: eine Skizze, in der das der Erfindung zugrundeliegende Prinzip symbolisch dargestellt ist,
- Figur 2: eine Skizze, in der ein Prozeßschichtenmodell dargestellt ist;
- Figur 3: ein Blockdiagramm, in dem ein Rechnernetz dargestellt ist;
- Figur 4: ein Ablaufdiagramm, in dem die einzelnen Verfahrensschritte des Ausführungsbeispiels dargestellt sind;
- Figur 5: eine Skizze, in der das Prinzip einer möglichen Integration der Erfindung in einem Betriebssystem dargestellt ist;
- Figur 6: eine Skizze, in der die mögliche Realisierung gemäß Figur 5 detailliert dargestellt ist;
- Figur 7: eine Skizze, in der eine weitere mögliche Integration der Erfindung in ein Betriebssystem dargestellt ist.

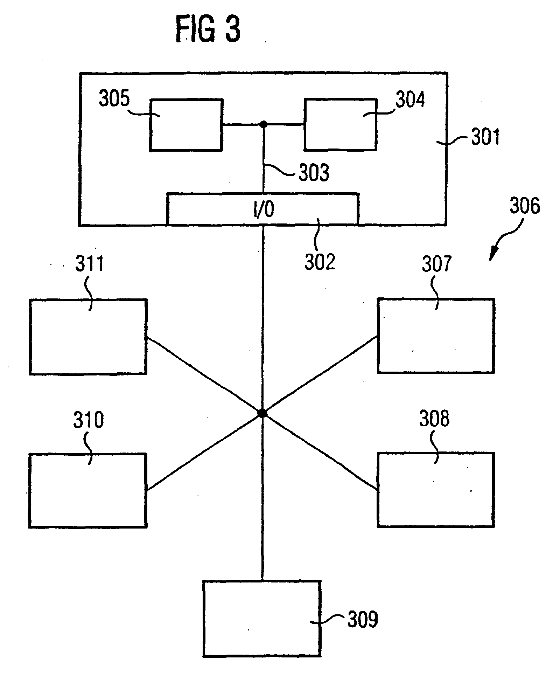

**Fig.3** zeigt einen ersten Rechner 301 mit einer Eingangs-/Ausgangsschnittstelle 302, die über einen Bus 303 mit einem Speicher 304 und einem Prozessor 305 verbunden ist. Über die Eingangs-/Ausgangsschnittstelle 302 ist der erste Rechner 301 über ein Rechnernetz 306 mit einer Vielzahl von Rechnern 307, 308, 309, 310, 311 verbunden.

Das zur Übertragung digitaler Daten verwendete Kommunikationsprotokoll ist das TCP/IP-Protokoll (Transmission Control Protocol/Internet Protocol).

Die Erfindung schützt den ersten Rechner 301 vor unbefugten Zugriffen von Prozessen, die entweder in dem Speicher 304 des ersten Rechners 301 gespeichert sind oder von den weiteren Rechnern 307, 308, 309, 310, 311, die auf den ersten Rechner 301 zugreifen/einwirken.

In dem ersten Rechner 301 ist das in [1] beschriebene Betriebssystem implementiert.

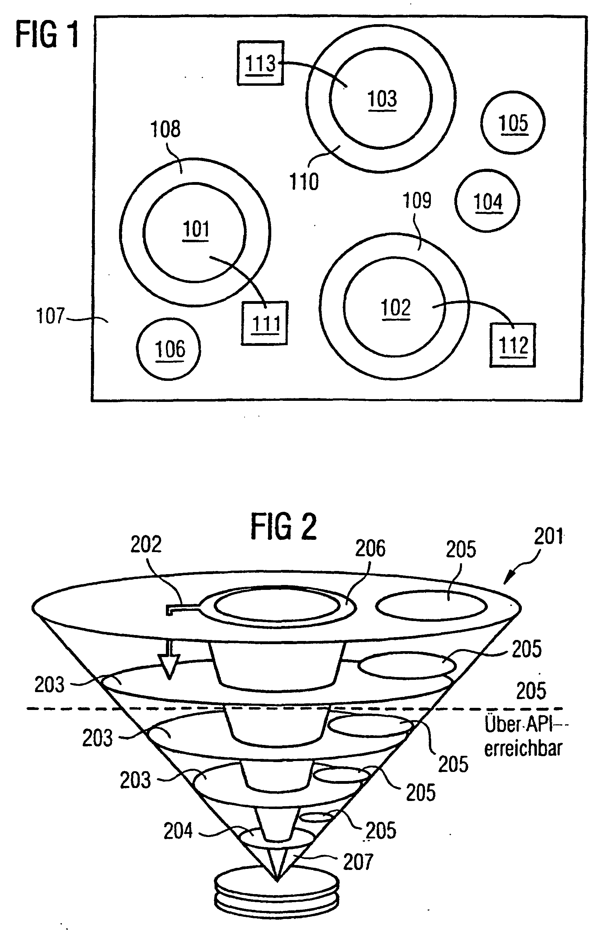

Das im weiteren detailliert erläuterte Prinzip, welches dem Verfahren bzw. der Anordnung zugrunde liegt, ist anschaulich in **Fig.1** dargestellt.

Symbolisch dargestellte Programme 101, 102, 103 sollen durch die Erfindung gegen unbefugten Zugriff durch mindestens einen Prozeß 104, 105, 106, der oder die auf ein Programm 101, 102, 103 zugreifen wollen, geschützt werden.

Die Programme 101, 102, 103 und Prozesse 104, 105, 106 verwenden als Betriebssystem, dargestellt als eine die Programme 101, 102, 103 und Prozesse 104, 105, 106 umrahmende Einheit 107 das in [1] beschriebene Betriebssystem.

Durch das Verfahren bzw. durch die Anordnung wird anschaulich um jedes zu schützende Programm 101, 102, 103 eine programmspezifische "Schutzhülle" 108, 109, 110 gebildet. Durch die programmspezifische Sicherung wird ein frei skalierbares Sicherheitsniveau für das zu schützende Programm 101, 102, 103 erreicht.

Das Verfahren bzw. die Anordnung kann, wie in einem Prozeßschichtenmodell 201 in **Fig.2** dargestellt, auf verschiedenen logischen Ebenen zu schützender Programme 101, 102, 103 realisiert werden. **Fig.2** zeigt drei logische Ebenen in dem Prozeßschichtenmodell 201.

Die Sicherung vor einem Angreifer 205 kann auf der Ebene zu schützender Anwendungsprogramme 202, auf der Ebene zu schützender Betriebssystemprogramme 203 sowie auf der Ebene des Betriebssystemkerns, und auf der System-Hardware 207 erfolgen.

Je näher an der System-Hardware 207 die Sicherung eines Programms erfolgt, desto größer ist das Sicherheitsniveau, das durch die Erfindung erreicht wird.

Die Schutzhülle 206 wird zur Laufzeit des zu schützenden Programms 101, 102, 103 um das Programm "gelegt".

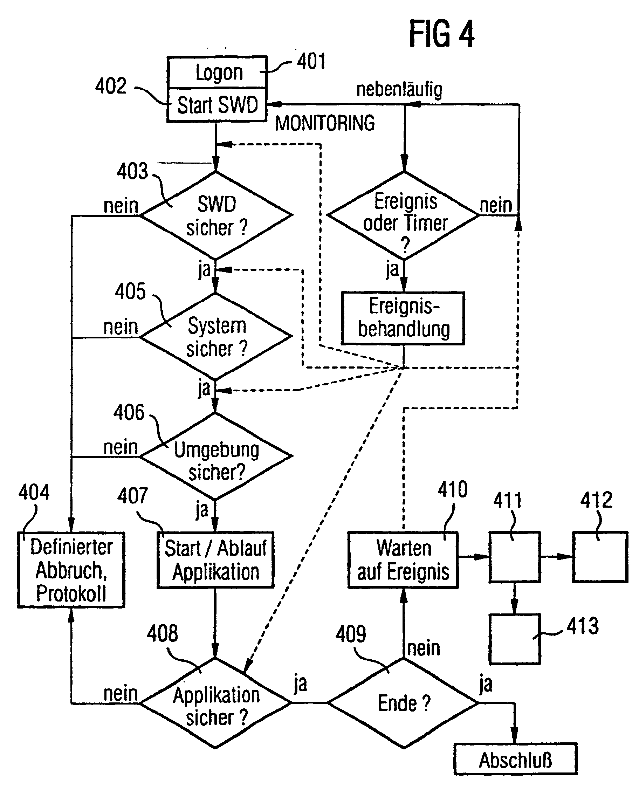

Das Verfahren wird in Form zyklischer, nebenläufiger Prozesse realisiert. Das Verfahren wird anhand des Ablaufdiagramms, das in **Fig.4** dargestellt ist, erläutert.

Als erstes nach dem Start des Betriebssystems (Schritt 401) wird ein Schutzprogramm gestartet (Schritt 402). Das Schutzprogramm ist derart eingerichtet, daß das im weiteren beschriebene Verfahren ausführbar ist. Das Schutzprogramm ist in verschlüsselter Form gespeichert, wodurch eine Veränderung des Schutzprogramms selbst nicht möglich ist.

Auch wird durch die Verschlüsselung des Schutzprogramms eine detaillierte Analyse des das Verfahren ausführenden Programms verhindert.

Zum Start des Schutzprogramms (Schritt 402) wird das Schutzprogramm durch eine vorgegebene Startroutine, die den zur Entschlüsselung des Schutzprogramms erforderlichen Schlüssel und eventuell weitere Grundfunktionen des Betriebssystems enthält, entschlüsselt, wodurch der eigentliche Programmcode des Schutzprogramms ermittelt wird.

Auf diese Weise ist das Schutzprogramm im aktiven Zustand vor off-line Angriffen wie disassemblieren, debuggen, patchen, ..., geschützt.

Nach der Entschlüsselung (Schritt 402) des Schutzprogramms wird die Integrität des Schutzprogramms dynamisch überprüft (Schritt 403).

Ist die Integrität des Schutzprogramms nicht gewährleistet, so wird das Verfahren abgebrochen (Schritt 404).

In einem weiteren Schritt wird die Integrität der Prozesse des Betriebssystems dynamisch überprüft (Schritt 405). Bei negativer Integritätsprüfung wird das Verfahren wiederum abgebrochen (Schritt 404).

Ist die Integrität der Prozesse des Betriebssystems 405 gewährleistet, so wird das zu schützende Programm gestartet.

Das oben beschriebene Verfahren wird für jedes zu schützende Programm 101, 102, 103, dynamisch durchgeführt.

Jedem zu schützenden Progamm 101, 102, 103 ist jeweils eine Prozeßdatei 111, 112, 113 zugeordnet.

In einer Prozeßdatei 111, 112, 113 ist für das zu schützende Programm 101, 102, 103, dem die Prozeß-Datei 111, 112, 113 zugeordnet ist, angegeben, welche Prozesse in einem Adreßraum, der ebenfalls jedem Programm 101, 102, 103 eindeutig zugeordnet ist, ablaufen dürfen. In den Prozeß-Dateien sind die Angaben mittels einer den jeweiligen Prozeß eindeutig kennzeichnenden Hash-Funktion gespeichert.

Nach Start des jeweiligen Programms 101, 102, 103 (Schritt 407) wird die Integrität des Programms 101, 102, 103 selbst überprüft (Schritt 408).

Bei negativer Integritätsprüfung wird wiederum das Verfahren abgebrochen (Schritt 404).

Bei positiver Integritätsprüfung, d.h. wenn die Integrität des Programms 101, 102, 103 gewährleistet ist, wird das Verfahren für das zu schützende Programm 101, 102, 103 solange wiederholt, bis das zu schützende Programm selbst beendet wird (Schritt 409).

Das Verfahren wird abhängig von einem vorgebbaren Ereignis oder in einem vorgebbaren Zeitabstand zwischen zwei Ausführungen des Verfahrens iteriert (Schritt 410).

Sobald ein Prozeß 104, 105, 106 auf den Adreßraum bzw. das Programm 101, 102, 103 selbst zugreifen will, wird in einem weiteren Schritt (Schritt 411) überprüft, ob der Prozeß 104, 105, 106 in der Prozeß-Datei des zu schützenden Programms 101, 102, 103, auf das der Prozeß 104, 105, 106 zugreifen will, enthalten ist oder nicht.

Dies erfolgt durch Bildung eines Hash-Wertes über den zugreifenden Prozeß 104, 105, 106 und Vergleich des Hash-Wertes des zugreifenden Prozesses 104, 105, 106 mit den Hash-Werten, die in der Prozeß-Datei gespeichert sind. Ist der zugreifende Prozeß in der Prozeß-Datei des zu schützenden Programms 101, 102, 103 angegeben, so wird der Prozeß 104, 105, 106 durchgeführt (Schritt 412).

Sonst wird der Prozeß 104, 105, 106 nicht gestartet (Schritt 413) und der Benutzer wird über einen möglichen Angriff auf sein Programm 101, 102, 103 informiert.

In vorgebbaren Zeitabständen oder ereignisgesteuert wird für jeden in dem Adreßraum eines Programms 101, 102, 103 aktiven Prozeß, d.h. ablaufenden Prozeß, überprüft, ob der jeweilige Prozeß in der Prozeß-Datei des entsprechenden Programms 101, 102, 103, dessen Adreßraum untersucht wird, enthalten ist. Ist dies nicht der Fall, so wird der entsprechende Prozeß beendet und der Benutzer wird auf einen möglichen Angriff auf sein Programm 101, 102, 103 hingewiesen.

Auf diese Weise ist eine regelmäßige Überwachung des Programms gewährleistet.

Im weiteren werden Möglichkeiten zur Integration des oben beschriebenen Verfahrens in das in [3] beschriebene Betriebssystem dargestellt:

### 1. Möglichkeit:

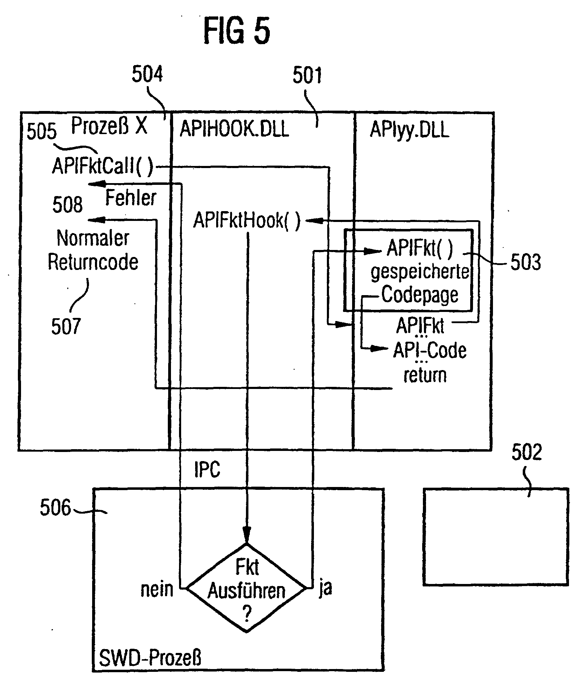

Integration einer dynamisch bindbaren Datei 501 in die Anwendungs-Programmier-Schnittstelle (Application Programming Interface, API) (vgl. **Fig.5**).

Die dynamisch bindbare Datei 501 wird im Adreßraum des potentiellen Angreifer-Programms 502 aktiv. Unter Verwendung der dynamisch bindbaren Datei 501 werden folgende Schritte in dem Adreßraum des potentiellen Angreifer-Programms 502 ausgeführt:
- Von der dynamisch bindbaren Datei 501 werden alle Kennzeichnungen (Modulhändel) von jeder weiteren dynamisch bindbaren Datei ermittelt, die zu überwachende Schnittstellen-Aufrufe enthält. Damit können alle Zugriffe auf alle zu überwachenden dynamisch bindbaren Dateien ermöglicht werden.
   Als für Angriffe relevant werden alle Schnittstellen-Aufrufe zum direkten oder indirekten Starten, Beenden und Kontrollieren von Prozessen, z.B. schreibende Zugriffe auf den Prozeßspeicher, Änderungen der Zugriffsrechte, prinzipiell alle Schnittstellen-Befehle, die mit fremden Prozeßmarkierungen (Prozeßhandles) arbeiten, alle Befehle zum Realisieren von Message Hooks (eine programmierbare Filterfunktion für Nachrichten zur GUI-Interkommunikation (Graphic User Interface) und zur Prozeßinterkommunikation), und für Debugging-Zwecke betrachtet.
   Unter dem Ausdruck "indirektes Starten" werden auch Mechanismen eines Compilers zur Selbstmodifikation von Programmcode, OLE (Object Link Embedding) und RPC-Mechanismen (Remote Procedure Call) sowie Zugriffe aus anderen Betriebssystem-Programmier-Schnittstellen verstanden. Ferner umfaßt dieser Ausdruck auch die Kontrolle der Mechanismen, die für den Ablauf dynamisch bindbarer Dateien 501 (ActiveX-Befehle usw.) eingesetzt werden.
- Ferner werden der dynamischen bindbaren Datei 501 Schreibrechte für den Adreßraum zugeordnet.
- Anstelle des Original-Schnittstellen-Aufrufs wird ein Sprung-Befehl gespeichert und die ersetzten Befehle des Original-Codes 503 werden gesichert.

Versucht nun ein Prozeß 504 über einen Schnittstellenaufruf APIFktCall() auf das zu schützende Programm 502 zuzugreifen bzw. ein bisher inaktives Programm zu starten, so wird durch die dynamisch bindbare Datei 501 das Schutzprogramm 506 aufgerufen. Als Übergabeparameter für das Schutzprogramm 506 wird dem Schutzprogramm 506 angegeben, welches Programm 502 durch den zugreifenden Prozeß 504 aufgerufen werden soll.

Durch einen Vergleich mit in der Prozeß-Datei des jeweiligen Programms 502 angegebenen zugelassenen Schnittstellen-Aufrufen wird dann gemäß dem oben beschriebenen Verfahren entschieden, ob der Schnittstellen-Aufruf 505 zugelassen wird oder nicht.

Der zugreifende Prozeß 504 wird dann entweder ausgeführt oder "abgeblockt". Wird in dem Schutzprogramm 506 entschieden, daß der zugreifende Prozeß 504 ausgeführt werden soll, so wird der Original-Code des Schnittstellen-Aufrufs 503 ausgeführt und nach dessen Ausführung wird ein Return-Code 507 an den zugreifenden Prozeß 504 zurückgegeben. Sonst wird eine Fehlermeldung 508 an den zugreifenden Prozeß 504 gemeldet.

Das oben beschriebene Verfahren verwendet den grundsätzlichen Mechanismus der sogenannten DLL-Injektion, die aus [5] bekannt ist.

### 2. Möglichkeit:

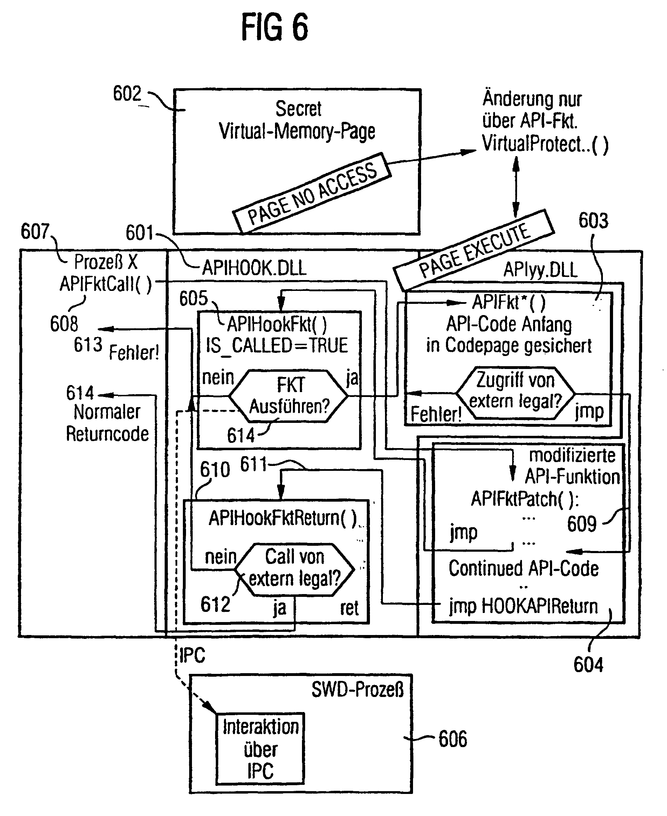

**Fig.6** zeigt das in **Fig.5** beschriebene Prinzip in verfeinerter Realisierung. Diese Variante eignet sich insbesondere für den Fall, daß sich fälschlicherweise ein als "sicher" deklarierter Prozeß in dem Adreßraum befindet, der die dynamisch bindbare Datei 601 selbst angreift.

Durch das im folgenden beschriebene Verfahren wird gewährleistet, daß ein Zugriff auf vorgegebene Daten nur aus der dynamisch bindbaren Datei 601 selbst heraus möglich ist und Zugriffe aus einem anderen Befehlsfolgesegment, insbesondere einer angreifenden Applikation, verhindert wird.

Das im folgenden dargestellte Verfahren wird vorzugsweise mit statischer Modifikation des oben beschriebenen Verfahrens realisiert.

Für das im weiteren beschriebene Verfahren werden folgende Annahmen getroffen:
- Zu schützende Daten werden in einem geschützten Bereich 602 gespeichert, die bei der Initialisierung der dynamisch bindbaren Datei 601 angelegt und beschrieben wird und anschließend ein Schutzattribut erhält, so daß auf den geschützten Bereich 602 nur durch die dynamisch bindbare Datei 601 selbst zugegriffen werden kann.
- Alle Bereiche, die ausführbaren Code enthalten, erhalten das Schutzattribut "page_execute", wodurch verhindert wird, daß der entsprechende ausführbare Code nicht verändert werden kann, ohne daß das Schutzattribut zuvor geändert wird.
- Jede Schnittstellen-Funktion 603 wird auf folgende Weise gesichert: Eine Einsprungsadresse für die Schnittstellen-Funktion 603 wird durch eine modifizierte Einsprungsadresse, die zu einer modifizierten Schnittstellen-Funktion 604 führt, ersetzt.
   In der modifizierten Schnittstellen-Funktion wird verzweigt zu einem Schnittstellen-Prozeß 605, der in der dynamisch bindbaren Datei 601 enthalten ist. Dieser Schnittstellen-Prozeß verzweigt zu dem Schutzprogramm 606, durch das für einen aufrufenden Prozeß 607, der mit einem Schnittstellenaufruf 608 versucht, auf die Schnittstellenfunktion 603 zuzugreifen, überprüft, ob dieser Aufruf für den zugreifenden Prozeß 607 zugelassen ist.
   Ist dies der Fall, so wird die Schnittstellenfunktion 603 ausgeführt und es wird nach Durchführung der Schnittstellenfunktion 603 wiederum in die modifizierte Schnittstellenfunktion 604 verzweigt, was durch einen Pfeil 609 symbolisiert ist. Nach Ausführung weiterer vorgebbarer Befehle wird in eine Schnittstellen-Rückkehr-Funktion 610 verzweigt, was durch einen Pfeil 611 angedeutet ist. Dies erfolgt durch einen Sprungbefehl. In der Schnittstellen-Rückkehr-Funktion 610 wird noch einmal überprüft (Schritt 612), ob der Schnittstellen-Aufruf 608 zugelassen ist.
   Wenn dies nicht der Fall ist, wird eine Fehlermeldung 613 an den Prozeß 607 gesendet. Dies erfolgt ebenso, wenn in der Schnittstellen-Funktion 605 unter Verwendung des oben beschriebenen Verfahrens ermittelt wurde, daß der Schnittstellen-Aufruf nicht zugelassen ist.
   Wird jedoch auch in dem Überprüfungsschritt 612 in der Schnittstellen-Rückkehr-Funktion 610 ermittelt, daß der Schnittstellen-Aufruf zugelassen ist, so wird das Ergebnis der aufgerufenen Schnittstellen-Funktion an den zugreifenden Prozeß 607 gesendet (Schritt 614).

### 3. Möglichkeit:

Die Erfindung kann auch in dem Betriebssystemkern integriert werden. Durch diese Ausführungsform wird erreicht, daß ein Kontrollmechanismus integrierbar ist, dessen Umgehung unter Benutzerzugriffsrechten nicht mehr möglich ist, sondern nur unter den Zugriffsrechten des Systemadministrators. Damit wird das erreichbare Sicherheitsniveau erheblich gesteigert.

Ein hierzu verwendbarer Integrationsmechanismus ist in [4] beschrieben. Bei diesem Mechanismus werden Schnittstellen-Aufrufe beim Übertritt in den Modus des Betriebssystemkerns (Kernel-Modus) im Betriebssystemkern selbst "abgefangen". Der Verwaltungsmechanismus für die Unterbrechnungs-Routine ist in diesem Fall im Betriebssystemkern realisiert und ist daher gegen Zugriffe von Prozessen, die im Benutzermodus aktiv sind, geschützt. Eine Übersicht verschiedener solcher möglichen alternativen Implementierungsmöglichkeiten ist in [4] zu finden.

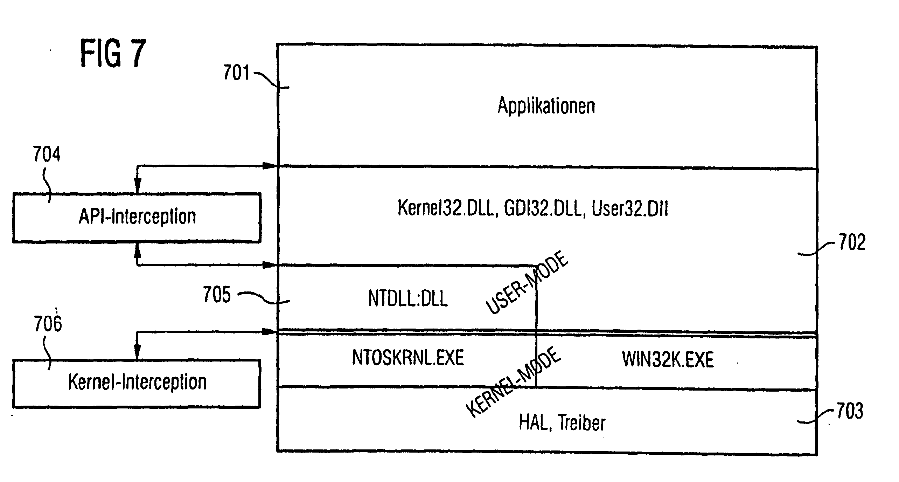

**Fig.7** zeigt in einer Übersicht zwei oben beschriebene Möglichkeiten zur Realisierung.

Ein Anwendungsprogramm 701 (Applikation) verwendet zum Programmablauf Funktionen des Betriebssystems.

Die Funktionen des Betriebssystems sind gruppiert in Funktionen 702 des Betriebssystems in einem Benutzermodus (User-Mode) und in Funktionen 703 des Kernel-Modus. Die Funktionen sind symbolisch jeweils als Blöcke dargestellt.

Durch dynamisch bindbare Dateien (*.dll) ist es möglich, das Verfahren im Rahmen des Benutzermodus zu integrieren, was durch einen ersten Block 704 unter Verwendung einer dynamisch bindbaren Datei "NTDLL.DLL" 705 des in [1] beschriebenen Betriebssystems erfolgen kann.

Die weitere Integrationsmöglichkeit des Verfahrens in den Betriebssystemkern ist durch einen zweiten Block 706 angedeutet, wobei bei dieser Integrationsvariante der Mechanismus beim Übergang des Benutzermodus in den Kernel-Modus integriert wird.

Im weiteren werden einige Alternativen zu den oben erläuterten Ausführungsbeispielen dargestellt:

Der Schutz des Schutzprogramms kann dadurch erhöht werden, daß die Startroutine im Betriebssystemkern integriert ist, z.B. als sogenannter Kernel-Modus-Prozeß oder auch System Service.

Die dynamisch bindbare Datei kann auch sowohl statisch als auch dynamisch, d.h. lediglich während der Laufzeit des zu schützenden Programms 502 oder während der gesamten Laufzeit des Betriebssystems vorgesehen sein.

Auch können alternativ Software-Unterbrechungs-Routinen als Alternative zu der dynamisch bindbaren Datei verwendet werden.

Die Erfindung kann sowohl durch Software als auch durch Hardware oder zum Teil durch Software und zum Teil durch Hardware realisiert werden.

Ferner kann, wie in **Fig.4** dargestellt, bei negativer Integritätsprüfung (Schritt 408) in einem weiteren Überprüfungsschritt (Schritt 414) überprüft werden, ob ein Nachladen des originalen Schutzprogramms und/oder eines zu schützenden Programms von einer vertrauenswürdigen Instanz möglich ist, oder ob eine Wiederherstellung des Schutzprogramms und/oder des zu schützenden Programms möglich ist, derart, daß dessen/deren Integrität gewährleistet ist.

Ist dies nicht möglich, so wird das Verfahren abgebrochen (Schritt 404).

Ist dies jedoch möglich, so wird die Integrität des neu geladenen bzw. wiederhergestellten Schutzprogramms weiter dynamisch überprüft (Schritt 403).

In einer weiteren Variante ist es vorgesehen, daß die Rechner mit einem Server, in **Fig.1** der erste Rechner, verbunden sind.

In jedem Rechner wird das oben beschriebene Verfahren zum Schutz eines Programms und/oder einer Datei durchgeführt.

Für den Fall, daß der zugreifende Prozeß in der Prozeß-Datei nicht angegeben ist, wird ein Alarmsignal generiert und an den Server gesendet. In dem Server wird abhängig von mindestens einem empfangenen Alarmsignal eine vorgegebene Aktion ausgelöst wird, beispielsweise ein zentral gesteuerter Abbruch eines Prozesses.

Im Rahmen dieses Dokuments wurden folgende Veröffentlichungen zitiert:
[1] Microsoft Windows NT workstation resource kit:
   comprehensive resource guide and utilities for Windows NT 4.0, ISBN 1-57231-343-9, Microsoft Press, C. Doyle (ed.), S. 117 - 118, 1996
[2] Dr. Solomon's Anti-Virus Toolkit Workstation, öffentlich zugänglich im Internet am 03.07.1998 unter der Internet-Adresse:
   http://www.drsolomon.de/produkte/avtkws/avtkws.html
[3] M. Petrek, Under the hood, MS-Journal, No. 12, December 1996,
[4] M. Russinovich, Windows NT System-Call Hooking, Dr. Dobb's Journal, S. 42 - 46, Januar 1997,
[5] J. Richter, Advanced Windows, ISBN 1-573231-548-2, 3rd Edition, S. 899 ff., Kapitel: Breaking Through Process-Boundary Walls, 1997
[6] US 5 390 310
[7] US 5 023 907
[8] David Solomon, Inside Microsoft Windows NT, 2. Aufl., in deutscher Übersetzung erschiennen in Microsoft Press 1998, englische Originalausgabe veröffentlicht im Mai 1998 bei Microsoft Press, Seiten 219-221, 303-323
[9] William Stallings, Operating Systems, 3. Aufl., erschienen bei Prentice Hall, Dezember 1997, Seiten 632-636, 668, 670-674

## Patentansprüche

1. Verfahren zum Schutz mehrerer Programme und/oder mehrerer Dateien vor einem unbefugten Zugriff durch einen Prozeß,
- bei dem jedem zu schützenden Programm und/oder jeder zu schützenden Datei jeweils ein Adreßraum zugeordnet ist,
- bei dem jedem zu schützenden Programm und/oder jeder zu schützenden Datei jeweils eine Prozeß-Datei zugeordnet ist,
- bei dem in einer Prozeß-Datei gespeichert ist, welcher Prozeß oder welche Prozesse in dem jeweiligen Adreßraum ablaufen darf oder dürfen,
- bei dem für zumindest einen Teil der in einer Prozeß-Datei angegebenen Prozesse ein den Prozeß eindeutig kennzeichnender kryptographischer Wert gebildet wird,
- bei dem in der Prozeß-Datei jeweils der kryptographische Wert eines Prozesses enthalten ist,
- bei dem während des Ablaufs eines zu schützenden Programms und/oder einer Verwendung einer zu schützenden Datei für einen Prozeß, der auf den Adreßraum des zu schützenden Programms und/oder der zu schützenden Datei zugreifen will, überprüft wird, ob der zugreifende Prozeß in der entsprechenden Prozeß-Datei angegeben ist,
- bei dem für den zugreifenden Prozeß dessen kryptographischer Wert gebildet wird,
- bei dem bei der Überprüfung die kryptographischen Werte der Prozesse miteinander verglichen werden,
- bei dem für den Fall, daß der zugreifende Prozeß in der Prozeß-Datei angegeben ist, der zugreifende Prozeß gestartet wird, und
- sonst der zugreifende Prozeß nicht gestartet wird.

2. Verfahren zum Schutz mehrerer Programme und/oder mehrerer Dateien vor einem unbefugten Zugriff durch einen Prozeß,
- bei dem jedem zu schützenden Programm und/oder jeder zu schützenden Datei jeweils ein Adreßraum zugeordnet ist,
- bei dem jedem zu schützenden Programm und/oder jeder zu schützenden Datei jeweils eine Prozeß-Datei zugeordnet ist,
- bei dem in einer Prozeß-Datei gespeichert ist, welcher Prozeß oder welche Prozesse in dem jeweiligen Adreßraum ablaufen darf oder dürfen,
- bei dem für zumindest einen Teil der in einer Prozeß-Datei angegebenen Prozesse ein den Prozeß eindeutig kennzeichnender kryptographischer Wert gebildet wird,
- bei dem in der Prozeß-Datei jeweils der kryptographische Wert eines Prozesses enthalten ist,
- bei dem während des Ablaufs eines zu schützenden Programms und/oder einer Verwendung einer zu schützenden Datei für einen Prozeß, der auf den Adreßraum des zu schützenden Programms und/oder der zu schützenden Datei zugreifen will, überprüft wird, ob der zugreifende Prozeß in der entsprechenden Prozeß-Datei angegeben ist,
- bei dem für den zugreifenden Prozeß dessen kryptographischer Wert gebildet wird,
- bei dem bei der Überprüfung die kryptographischen Werte der Prozesse miteinander verglichen werden,
- bei dem für den Fall, daß der zugreifende Prozeß in der Prozeß-Datei angegeben ist, der zugreifende Prozeß weitergeführt wird, und
- sonst der zugreifende Prozeß beendet wird.

3. Verfahren nach Anspruch 1 oder 3,
bei dem in einem Aufrufmechanismus für eine Funktion eines Betriebssystemkerns, mit dem die Programme ausgeführt werden, ein Aufruf des zugreifenden Prozesses einer Überprüfungsfunktion zugeleitet wird, in der die Überprüfung erfolgt.

4. Verfahren nach Anspruch 3,
bei dem die Überprüfungsfunktion als dynamisch bindbare Datei in den Adreßraum des zu schützenden Programms und/oder der ,zu schützenden Datei eingebunden wird.

5. Verfahren nach Anspruch 1 oder 2,
- bei dem ein Aufruf des zugreifenden Prozesses einer Überprüfungsfunktion zugeleitet wird, in der die Überprüfung erfolgt, und
- bei dem die Überprüfungsfunktion in einen Betriebssystemkern eines Betriebssystems, mit dem die Programme ausgeführt werden, integriert ist.

6. Verfahren nach einem der Ansprüche 1 bis 5,
bei dem das Betriebssystem Windows NT ist.

7. Verfahren nach einem der Ansprüche 1 bis 6,
bei dem in einem vorgebbaren Zeitabstand für jeden aktiven Prozeß, der zusammen mit einem zu schützenden Programm und/oder einer zu schützenden Datei abläuft, überprüft wird, ob der aktive Prozeß in der Prozeß-Datei, die dem zu schützenden Programm und/oder der zu schützenden Datei zugeordnet ist, enthalten ist und der Prozeß beendet wird, falls dies nicht der Fall ist.

8. Verfahren nach einem der Ansprüche 1 bis 7,
bei dem abhängig von einem vorgebbaren Ereignis für jeden aktiven Prozeß, der zusammen mit einem zu schützenden Programm und/oder einer zu schützenden Datei abläuft, überprüft wird, ob der aktive Prozeß in der Prozeß-Datei, die dem zu schützenden Programm zugeordnet ist, enthalten ist und der Prozeß beendet wird, falls dies nicht der Fall ist.

9. Verfahren nach einem der Ansprüche 1 bis 8,
bei dem ein Schutzprogramm zum Schutz des Verfahrens nach einem der vorangegangenen Ansprüche ausführbar ist, verschlüsselt gespeichert ist und zu Beginn des Verfahrens entschlüsselt wird.

10. Verfahren nach einem der Ansprüche 1 bis 9,
bei dem die zu schützenden Programme und/oder die zu schützenden Dateien verschlüsselt gespeichert sind und zu Beginn des Verfahrens nach einem der vorangegangenen Ansprüche entschlüsselt werden.

11. Verfahren nach Anspruch 9,
bei dem nach der Entschlüsselung des Schutzprogramms dessen Integrität überprüft wird und das Verfahren nach einem der vorangegangenen Ansprüche nur ausgeführt wird, wenn die Integrität des Schutzprogramms gewährleistet ist.

12. Verfahren nach Anspruch 11,
bei dem nach der Integritätsprüfung des Schutzprogramms die Integrität aller in den Prozeß-Dateien enthaltenen Prozesse überprüft wird und das Verfahren nach einem der vorangegangenen Ansprüche nur ausgeführt wird, wenn die Integrität aller in den Prozeß-Dateien enthaltenen Prozesse gewährleistet ist.

13. Verfahren nach Anspruch 12,
bei dem nach der Integritätsprüfung der Prozesse die Integrität des zu schützenden Programms und/oder der zu schützenden Datei überprüft wird und das Verfahren nach einem der vorangegangenen Ansprüche nur ausgeführt wird, wenn die Integrität des zu schützenden Programms und/oder der zu schützenden Datei gewährleistet ist.

14. Verfahren nach Anspruch 12 oder 13,
bei dem mindestens eine der Integritätsprüfung unter Verwendung eines kryptographischen Verfahrens erfolgt.

15. Verfahren nach einem der Ansprüche 1 bis 14,
bei dem der kryptographische Wert durch Anwendung einer Hash-Funktion gebildet wird.

16. Anordnung zum Schutz mehrerer Programme vor einem unbefugten Zugriff durch einen Prozeß,
mit einem Prozessor, der zur Durchführung folgender Schritte eingerichtet ist:
- jedem zu schützenden Programm und/oder jeder zu schützenden Datei ist jeweils ein Adreßraum zugeordnet,
- jedem zu schützenden Programm und/oder jeder zu schützenden Datei ist jeweils eine Prozeß-Datei zugeordnet,
- in einer Prozeß-Datei ist gespeichert, welcher Prozeß oder welche Prozesse in dem jeweiligen Adreßraum ablaufen darf oder dürfen,
- für zumindest einen Teil der in einer Prozeß-Datei angegebenen Prozesse wird ein den Prozeß eindeutig kennzeichnender kryptographischer Wert gebildet,
- in der Prozeß-Datei ist jeweils der kryptographische Wert eines Prozesses enthalten,
- während des Ablaufs eines zu schützenden Programms und/oder einer Verwendung einer zu schützenden Datei wird für einen Prozeß, der auf den Adreßraum des zu schützenden Programms und/oder der zu schützenden Datei zugreifen will, überprüft, ob der zugreifende Prozeß in der entsprechenden Prozeß-Datei angegeben ist,
- für den zugreifenden Prozeß wird dessen kryptographischer Wert gebildet,
- bei der Überprüfung worde die kryptographischen Werte der Prozesse miteinander verglichen,
- für den Fall, daß der zugreifende Prozeß in der Prozeß-Datei angegeben ist, wird der zugreifende Prozeß gestartet, und
- sonst wird der zugreifende Prozeß nicht gestartet.

17. Anordnung zum Schutz mehrerer Programme vor einem unbefugten Zugriff durch einen Prozeß,
mit einem Prozessor, der zur Durchführung folgender Schritte eingerichtet ist:
- jedem zu schützenden Programm und/oder jeder zu schützenden Datei ist jeweils ein Adreßraum zugeordnet,
- jedem zu schützenden Programm und/oder jeder zu schützenden Datei ist jeweils eine Prozeß-Datei zugeordnet,
- in einer Prozeß-Datei ist gespeichert, welcher Prozeß oder welche Prozesse in dem jeweiligen Adreßraum ablaufen darf oder dürfen,
- für zumindest einen Teil der in einer Prozeß-Datei angegebenen Prozesse wird ein den Prozeß eindeutig kennzeichnender kryptographischer Wert gebildet,
- in der Prozeß-Datei ist jeweils der kryptographische Wert eines Prozesses enthalten,
- während des Ablaufs eines zu schützenden Programms, und/oder einer Verwendung einer zu schützenden Datei wird für einen Prozeß, der auf den Adreßraum des zu schützenden Programms und/oder der zu schützenden Datei zugreifen will, überprüft, ob der zugreifende Prozeß in der entsprechenden Prozeß-Datei angegeben ist,
- für den zugreifenden Prozeß wird dessen kryptographischer Wert gebildet,
- bei der Überprüfung werden die kryptographischen Werte der Prozesse miteinander verglichen,
- für den Fall, daß der zugreifende Prozeß in der Prozeß-Datei angegeben ist, wird der zugreifende Prozeß weitergeführt, und
- sonst wird der zugreifende Prozeß beendet.

18. Anordnung nach Anspruch 16 oder 17,
bei der der Prozessor derart eingerichtet ist, daß in einem Aufrufmechanismus für eine Funktion eines Betriebssystemkerns, mit dem die Programme ausgeführt werden, ein Aufruf des zugreifenden Prozesses einer Überprüfungsfunktion zugeleitet wird, in der die Überprüfung erfolgt.

19. Anordnung nach einem der Ansprüche 16 bis 18,
bei der der Prozessor derart eingerichtet ist, daß das Betriebssystem Windows NT ist.

20. Satz mehrerer Anordnungen und eine mit jeder Anordnung
des Satzes mehrerer Anordnungen verbundene Server-Anordnung zum Schutz mehrerer Programme vor einem unbefugten Zugriff durch einen Prozeß,
wobei jede Anordnung einen Prozessor aufweist, der zur Durchführung folgender Schritte eingerichtet ist:
- jedem zu schützenden Programm und/oder jeder zu schützenden Datei ist jeweils ein Adreßraum zugeordnet,
- jedem zu schützenden Programm und/oder jeder zu schützenden Datei ist jeweils eine Prozeß-Datei zugeordnet,
- in einer Prozeß-Datei ist gespeichert, welcher Prozeß oder welche Prozesse in dem jeweiligen Adreßraum ablaufen darf oder dürfen,
- für zumindest einen Teil der in einer Prozeß-Datei angegebenen Prozesse wird ein den Prozeß eindeutig kennzeichnender kryptographischer Wert gebildet,
- in der Prozeß-Datei ist jeweils der kryptographische Wert eines Prozesses enthalten,
- während des Ablaufs eines zu schützenden Programms und/oder einer Verwendung einer zu schützenden Datei wird für einen Prozeß, der auf den Adreßraum des zu schützenden Programms und/oder der zu schützenden Datei zugreifen will, überprüft, ob der zugreifende Prozeß in der entsprechenden Prozeß-Datei angegeben ist,
- für den zugreifenden Prozeß wird dessen kryptographischer Wert gebildet,
- bei der Überprüfung werden die kryptographischen Werte der Prozesse miteinander verglichen,
- für den Fall, daß der zugreifende Prozeß in der Prozeß-Datei angegeben ist, wird der zugreifende Prozeß gestartet oder weitergeführt, und
- sonst wird ein Alarmsignal generiert und an die Server-Anordnung gesendet,
und wobei die Server-Anordnung einen Prozessor aufweist, der derart eingerichtet ist, daß abhängig von mindestens einem empfangenen Alarmsignal eine vorgegebene Aktion ausgelöst wird.

## Claims

1. Method for protecting a plurality of programs and/or a plurality of files from unauthorized access by a process,
- in which each program to be protected and/or each file to be protected has a respective associated address space,
- in which each program to be protected and/or each file to be protected has a respective associated process file,
- in which a process file stores which process or which processes is or are able to be executed in the respective address space,
- in which, for at least some of the processes specified in a process file, a cryptographic value clearly distinguishing the process is formed,
- in which the process file contains the respective cryptographic value of a process,
- in which, during execution of a program which is to be protected and/or use of a file which is to be protected, a process wishing to access the address space of the program which is to be protected and/or of the file which is to be protected has a check carried out for it to determine whether the accessing process is specified in the corresponding process file,
- in which the accessing process has its cryptographic value formed,
- in which the check involves the cryptographic values of the processes being compared with one another,
- in which the accessing process is started if the accessing process is specified in the process file, and
- otherwise the accessing process is not started.

2. Method for protecting a plurality of programs and/or a plurality of files from unauthorized access by a process,
- in which each program to be protected and/or each file to be protected has a respective associated address space,
- in which each program to be protected and/or each file to be protected has a respective associated process file,
- in which a process file stores which process or which processes is or are able to be executed in the respective address space,
- in which, for at least some of the processes specified in a process file, a cryptographic value clearly distinguishing the process is formed,
- in which the process file contains the respective cryptographic value of a process,
- in which, during execution of a program which is to be protected and/or use of a file which is to be protected, a process wishing to access the address space of the program which is to be protected and/or of the file which is to be protected has a check carried out for it to determine whether the accessing process is specified in the corresponding process file,
- in which the accessing process has its cryptographic value formed,
- in which the check involves the cryptographic values of the processes being compared with one another,
- in which the accessing process is continued if the accessing process is specified in the process file, and
- otherwise the accessing process is terminated.

3. Method according to Claim 1 or 2,
in which, in a call mechanism for a function of an operating system core which is used to execute the programs, a call for the accessing process is supplied to a checking function, in which the check is made.

4. Method according to Claim 3,
in which the checking function is incorporated into the address space of the program which is to be protected and/or of the file which is to be protected as a dynamically linkable file.

5. Method according to Claim 1 or 2,
- in which a call for the accessing process is supplied to a setting function, in which the check is made, and
- in which the checking function is integrated in an operating system core in an operating system which is used to execute the programs.

6. Method according to one of Claims 1 to 5,
in which the operating system is Windows NT.

7. Method according to one of Claims 1 to 6,
in which each active process executed together with a program which is to be protected and/or with a file which is to be protected has a check carried out for it, at a prescribable interval of time, to determine whether the active process is contained in the process file associated with the program which is to be protected and/or with the file which is to be protected, and the process is terminated if this is not the case.

8. Method according to one of Claims 1 to 7,
in which, on the basis of a prescribable event, each active process executed together with a program which is to be protected and/or with a file which is to be protected has a check carried out for it to determine whether the active process is contained in the process file associated with the program which is to be protected, and the process is terminated if this is not the case.

9. Method according to one of Claims 1 to 8,
in which a protective program for protecting the method according to one of the preceding claims can be executed, is stored in encrypted form and is decrypted at the start of the method.

10. Method according to one of Claims 1 to 9,
in which the programs which are to be protected and/or the files which are to be protected are stored in encrypted form and are decrypted at the start of the method according to one of the preceding claims.

11. Method according to Claim 9,
in which decryption of the protective program is followed by a check on the latter's integrity, and the method according to one of the preceding claims is carried out only if the integrity of the protective program is assured.

12. Method according to Claim 11,
in which the integrity check for the protective program is followed by a check on the integrity of all the processes contained in the process files, and the method according to one of the preceding claims is carried out only if the integrity of all the processes contained in the process file is assured.

13. Method according to Claim 12,
in which the integrity check for the processes is followed by a check on the integrity of the program which is to be protected and/or of the file which is to be protected, and the method according to one of the preceding claims is carried out only if the integrity of the program which is to be protected and/or of the file which is to be protected is assured.

14. Method according to Claim 12 or 13,
in which at least one of the integrity checks is performed using a cryptographic method.

15. Method according to one of Claims 1 to 14,
in which the cryptographic value is formed by using a hash function.

16. Arrangement for protecting a plurality of programs from unauthorized access by a process,
having a processor which is set up to carry out the following steps:
- each program to be protected and/or each file to be protected has a respective associated address space,
- each program to be protected and/or each file to be protected has a respective associated process file,
- a process file stores which process or which processes is or are able to be executed in the respective address space,
- for at least some of the processes specified in a process file, a cryptographic value clearly distinguishing the process is formed,
- the process file contains the respective cryptographic value of a process,
- during execution of a program which is to be protected and/or use of a file which is to be protected, a process wishing to access the address space of the program which is to be protected and/or of the file which is to be protected has a check carried out for it to determine whether the accessing process is specified in the corresponding process file,
- the accessing process has its cryptographic value formed,
- the check involves the cryptographic values of the processes being compared with one another,
- the accessing process is started if the accessing process is specified in the process file, and
- otherwise the accessing process is not started.

17. Arrangement for protecting a plurality of programs from unauthorized access by a process,
having a processor which is set up to carry out the following steps:
- each program to be protected and/or each file to be protected has a respective associated address space,
- each program to be protected and/or each file to be protected has a respective associated process file,
- a process file stores which process or which processes is or are able to be executed in the respective address space,
- for at least some of the processes specified in a process file, a cryptographic value clearly distinguishing the process is formed,
- the process file contains the respective cryptographic value of a process,
- during execution of a program which is to be protected and/or use of a file which is to be protected, a process wishing to access the address space of the program which is to be protected and/or of the file which is to be protected has a check carried out for it to determine whether the accessing process is specified in the corresponding process file,
- the accessing process has its cryptographic value formed,
- the check involves the cryptographic values of the processes being compared with one another,
- the accessing process is continued if the accessing process is specified in the process file, and
- otherwise the accessing process is terminated.

18. Arrangement according to Claim 16 or 17,
in which the processor is set up such that in a call mechanism for a function of an operating system core which is used to execute the programs, a call for the accessing process is supplied to a checking function, in which the check is made.

19. Arrangement according to one of Claims 16 to 18,
in which the processor is set up such that the operating system is Windows NT.

20. Set of a plurality of arrangements and a server arrangement, connected to each arrangement in the set of a plurality of arrangements, for protecting a plurality of programs from unauthorized access by a process,
where each arrangement has a processor which is set up to carry out the following steps:
- each program to be protected and/or each file to be protected has a respective associated address space,
- each program to be protected and/or each file to be protected has a respective associated process file,
- a process file stores which process or which processes is or are able to be executed in the respective address space,
- for at least some of the processes specified in a process file, a cryptographic value clearly distinguishing the process is formed,
- the process file contains the respective cryptographic value of a process,
- during execution of a program which is to be protected and/or use of a file which is to be protected, a process wishing to access the address space of the program which is to be protected and/or of the file which is to be protected has a check carried out for it to determine whether the accessing process is specified in the corresponding process file,
- the accessing process has its cryptographic value formed,
- the check involves the cryptographic values of the processes being compared with one another,
- the accessing process is started or continued if the accessing process is specified in the process file, and
- otherwise an alarm signal is generated and is sent to the server arrangement,
and where the server arrangement has a processor which is set up such that a prescribed action is initiated on the basis of at least one received alarm signal.

## Revendications

1. Procédé pour la protection de plusieurs programmes et/ou de plusieurs fichiers contre un accès non autorisé tenté par un processus,
- dans lequel un espace d'adresse est respectivement attribué à chaque programme à protéger et/ou à chaque fichier à protéger,
- dans lequel un fichier de processus est respectivement attribué à chaque programme à protéger et/ou à chaque fichier à protéger,
- dans lequel il est mémorisé dans un fichier de processus, quel processus ou quels processus peut ou peuvent se dérouler dans l'espace d'adresse respectif,
- dans lequel une valeur cryptographique caractérisant le processus de manière univoque est formée pour au moins une partie des processus indiqués dans un fichier de processus,
- dans lequel la valeur cryptographique respective d'un processus est contenue dans le fichier de processus,
- dans lequel il est vérifié, pendant le déroulement d'un programme à protéger et/ou d'utilisation d'un fichier à protéger, pour un processus voulant accéder à l'espace d'adresse du programme à protéger et/ou du fichier à protéger, si le processus ayant accès est indiqué dans le fichier de processus correspondant,
- dans lequel la valeur cryptographique du processus ayant accès est formée pour celui-ci,
- dans lequel les valeurs cryptographiques des processus sont comparées entre elles lors de la vérification,
- dans lequel, au cas où le processus ayant accès est indiqué dans le fichier de processus, le processus ayant accès est démarré, et
- sinon le processus ayant accès n'est pas démarré.

2. Procédé pour la protection de plusieurs programmes et/ou de plusieurs fichiers contre un accès non autorisé tenté par un processus,
- dans lequel un espace d'adresse est respectivement attribué à chaque programme à protéger et/ou à chaque fichier à protéger,
- dans lequel un fichier de processus est respectivement attribué à chaque programme à protéger et/ou à chaque fichier à protéger,
- dans lequel il est mémorisé dans un fichier de processus, quel processus ou quels processus peut ou peuvent se dérouler dans l'espace d'adresse respectif,
- dans lequel une valeur cryptographique caractérisant le processus de manière univoque est formée pour au moins une partie des processus indiqués dans un fichier de processus,
- dans lequel la valeur cryptographique respective d'un processus est contenue dans le fichier de processus,
- dans lequel il est vérifié, pendant le déroulement d'un programme à protéger et/ou d'une utilisation d'un fichier à protéger, pour un processus voulant accéder à l'espace d'adresse du programme à protéger et/ou du fichier à protéger, si le processus ayant accès est indiqué dans le fichier de processus correspondant,
- dans lequel la valeur cryptographique du processus ayant accès est formée pour celui-ci,
- dans lequel les valeurs cryptographiques des processus sont comparées entre elles lors de la vérification,
- dans lequel, au cas où le processus ayant accès est indiqué dans le fichier de processus, le processus ayant accès est poursuivi, et
- sinon le processus ayant accès est terminé.

3. Procédé selon la revendication 1 ou 3,
dans lequel, dans un mécanisme d'appel d'une fonction d'un noyau de système d'exploitation, avec lequel les programmes sont exécutés, un appel du processus ayant accès est amené à une fonction de vérification dans laquelle a lieu la vérification.

4. Procédé selon la revendication 3
dans lequel la fonction de vérification est insérée dans l'espace d'adresse du programme à protéger et/ou du fichier à protéger comme fichier pouvant être lié dynamiquement.

5. Procédé selon la revendication 1 ou 2,
- dans lequel un appel du processus ayant accès est amené à une fonction de vérification, dans laquelle a lieu la vérification, et
- dans lequel la fonction de vérification est intégrée dans un noyau de système d'exploitation d'un système d'exploitation, avec lequel les programmes sont exécutés.

6. Procédé selon l'une quelconque des revendications 1 à 5,
dans lequel le système d'exploitation est Windows NT.

7. Procédé selon l'une quelconque des revendications 1 à 6,
dans lequel il est vérifié, dans un intervalle de temps définissable pour chaque processus actif qui se déroule en même temps que le programme à protéger et/ou le fichier à protéger, si le processus actif est contenu dans le fichier de processus, qui est attribué au programme à protéger et/ou au fichier à protéger, et dans lequel le processus est terminé au cas où ceci n'est pas le cas.

8. Procédé selon l'une quelconque des revendications 1 à 7,
dans lequel il est vérifié, en fonction d'un événement définissable pour chaque processus actif qui se déroule en même temps qu'un programme à protéger et/ou qu'un fichier à protéger, si le processus actif est contenu dans le fichier de processus qui est attribué au programme à protéger, et dans lequel le processus est terminé au cas où ceci n'est pas le cas.

9. Procédé selon l'une quelconque des revendications 1 à 8,
dans lequel un programme de protection est exécutable selon l'une des revendications précédentes pour la protection du procédé, mémorisé de manière codée et décodé au début du procédé.

10. Procédé selon l'une quelconque des revendications 1 à 9,
dans lequel les programmes à protéger et/ou les fichiers à protéger sont mémorisés en étant codés et sont décodés au début du procédé selon l'une des revendications précédentes.

11. Procédé selon la revendication 9,
dans lequel, après le décodage du programme de protection, l'intégrité de celui-ci est vérifiée et le procédé selon l'une des revendications précédentes n'est exécuté que si l'intégrité du programme de protection est assurée.

12. Procédé selon la revendication 11,
dans lequel, après la vérification d'intégrité du programme de protection, l'intégrité de tous les processus contenus dans les fichiers de processus est vérifiée et le procédé selon l'une des revendications précédentes n'est exécuté que si l'intégrité de tous les processus contenus dans les fichiers de processus est assurée.

13. Procédé selon la revendication 12,
dans lequel, après la vérification d'intégrité des processus, l'intégrité du programme à protéger et/ou du fichier à protéger est vérifiée et le procédé selon l'une des revendications précédentes n'est exécuté que si l'intégrité du programme à protéger et/ou du fichier à protéger est assurée.

14. Procédé selon la revendication 12 ou 13,
dans lequel au moins l'une des vérifications d'intégrité est réalisée en utilisant un procédé cryptographique.

15. Procédé selon l'une des revendications 1 à 14,
dans lequel la valeur cryptographique est formée en utilisant une fonction de contrôle Hash.

16. Dispositif pour la protection de plusieurs programmes contre un accès non autorisé tenté par un processus,
comprenant un processeur qui est agencé pour réaliser les étapes suivantes :
- un espace d'adresse est respectivement attribué à chaque programme à protéger et/ou à chaque fichier à protéger,
- un fichier de processus est respectivement attribué à chaque programme à protéger et/ou à chaque fichier à protéger,
- dans un fichier de processus est mémorisé quel processus ou quels processus peut ou peuvent se dérouler dans l'espace d'adresse respectif,
- une valeur cryptographique caractérisant le processus de manière univoque est formée pour au moins une partie des processus indiqués dans un fichier de processus,
- la valeur cryptographique d'un processus est respectivement contenue dans le fichier de processus,
- pendant le déroulement d'un programme à protéger et/ou d'une utilisation d'un fichier à protéger, il est vérifié pour un processus voulant avoir accès à l'espace d'adresse du programme à protéger et/ou du fichier à protéger si le processus ayant accès est indiqué dans le fichier de processus correspondant,
- la valeur cryptographique du processus ayant accès est formée pour celui-ci,
- les valeurs cryptographiques des processus sont comparées entre elles lors de la vérification,
- le processus ayant accès est démarré au cas où le processus ayant accès est indiqué dans le fichier de processus, et
- le processus n'est sinon pas démarré.

17. Dispositif pour la protection de plusieurs programmes contre un accès non autorisé tenté par un processus,
comprenant un processeur agencé pour la réalisation des étapes suivantes :
- un espace d'adresse est respectivement attribué à chaque programme à protéger et/ou à chaque fichier à protéger,
- un fichier de processus est respectivement attribué à chaque programme à protéger et/ou à chaque fichier à protéger,
- dans un fichier de processus est mémorisé quel processus ou quels processus peut ou peuvent se dérouler dans l'espace d'adresse respectif,
- une valeur cryptographique caractérisant le processus de manière univoque est formée pour au moins une partie des processus indiqués dans un fichier de processus,
- la valeur cryptographique d'un processus'est respectivement contenue dans le fichier de processus,
- pendant le déroulement d'un programme à protéger et/ou d'une utilisation d'un fichier à protéger, il est vérifié pour un processus voulant avoir accès à l'espace d'adresse du programme à protéger et/ou du fichier à protéger si le processus ayant accès est indiqué dans le fichier de processus correspondant,
- la valeur cryptographique du processus ayant accès est formée pour celui-ci,
- les valeurs cryptographiques des processus sont comparées entre elles lors de la vérification,
- le processus ayant accès est poursuivi au cas où le processus ayant accès est indiqué dans le fichier de processus, et
- le processus ayant accès est sinon terminé.

18. Dispositif selon la revendication 16 ou 17,
dans lequel le processeur est agencé de telle manière que, dans un mécanisme d'appel d'une fonction d'un noyau de système d'exploitation, avec lequel les programmes sont exécutés, un appel du processus ayant accès est amené à une fonction de vérification dans laquelle a lieu la vérification.

19. Dispositif selon l'une quelconque des revendications 16 à 18,
dans lequel le processeur est agencé de telle manière que le système d'exploitation est Windows NT.

20. Jeu de plusieurs dispositifs et un dispositif de serveurs lié à chaque dispositif du jeu de plusieurs dispositifs pour la protection de plusieurs programmes contre un accès non autorisé tenté par un processus,
chaque dispositif présentant un processeur agencé pour exécuter les étapes suivantes :
- un espace d'adresse est respectivement attribué à chaque programme à protéger et/ou à chaque fichier à protéger,
- un fichier de processus est respectivement attribué à chaque programme à protéger et/ou à chaque fichier à protéger,
- dans un fichier de processus est mémorisé quel processus ou quels processus peut ou peuvent se dérouler dans l'espace d'adresse respectif,
- une valeur cryptographique caractérisant le processus de manière univoque est formée pour au moins une partie des processus indiqués dans un fichier de processus,
- la valeur cryptographique d'un processus est respectivement contenue dans le fichier de processus,
- pendant le déroulement d'un programme à protéger et/ou d'une utilisation d'un fichier à protéger, il est vérifié pour un processus voulant avoir accès à l'espace d'adresse du programme à protéger et/ou du fichier à protéger si le processus ayant accès est indiqué dans le fichier de processus correspondant,
- la valeur cryptographique du processus ayant accès est formée pour celui-ci,
- les valeurs cryptographiques des processus sont comparées entre elles lors de la vérification,
- le processus ayant accès est démarré ou poursuivi au cas où le processus ayant accès est indiqué dans le fichier de processus, et
- un signal d'alarme est sinon généré et émis au dispositif de serveurs
et le dispositif de serveurs présentant un processeur agencé de telle sorte qu'une action définie est déclenchée en fonction d'au moins un signal d'alarme reçu.
